# EUROPÄISCHE PATENTSCHRIFT

(11) **EP 0 636 781 B1**
(45) Veröffentlichungstag und Bekanntmachung des Hinweises auf die Patenterteilung: **04.09.1996**
(21) Anmeldenummer: 94107267.0
(22) Anmeldetag: 10.05.1994
(51) Int. Cl.: F02M 25/07

(54) **Zumischventil, insbesondere Abgasrückführ-Ventil einer Brennkraftmaschine**
Mixing valve, especially an exhaust gas recirculation valve for an internal combustion engine
Soupape de mélange, notamment une soupape de recirculation de gaz d'échappement pour un moteur à combustion interne

(30) Priorität: 27.07.1993 DE 4325169
(43) Veröffentlichungstag der Anmeldung: 01.02.1995
(73) Patentinhaber: Bayerische Motoren Werke Aktiengesellschaft, 80788 München (DE)
(72) Erfinder: Beier, Gerhard, D-82377 Penzberg (DE); Jeschonnek, Peter, D-83620 Feldkirchen-Westerham (DE); Göthel, Heike, D-81373 München (DE)

(56) Entgegenhaltungen:
- EP-A- 0 349 729
- EP-A- 0 486 338
- DE-A- 2 703 687
- DE-A- 4 227 739
- DE-C- 3 444 877
- DE-C- 3 623 677
- FR-A- 2 225 626
- MOTORTECHNISCHE ZEITSCHRIFT 54, Nr.3, 1993 Seiten 150 - 153 R.J.MENNE ET AL. 'Die neuen DOHC-16-Ventil-Vierzylindermotoren für den Ford Mondeo'

## Beschreibung

Die Erfindung betrifft ein Zumischventil zur Beimengung eines heißen Fluidstromes zu einem kalten Fluidstrom, insbesondere ein Abgasrückführ-Ventil einer Brennkraftmaschine, mit einem Gehäuse zur Führung des kalten Fluidstromes und einem den heißen Fluidstrom zuführenden und steuernden Ventilschließglied, das aus einem den heißen Fluidstrom führenden Rohr, das das Gehäuse durchdringt und am Gehäuse gelagert ist, sowie aus einem auf das Rohrende aufsetzbaren Ventilteller besteht. Ein derartiges Zumischventil ist aus der DE-A-27 03 687 bekannt.

Die beiden im Zumischventil geführten Fluidströme können dabei gasförmig oder flüssig sein; die Begriffe kalt bzw. heiß sind relativ zu werten. Im Falle des insbesondere vorgesehenen Einsatzgebietes als Abgasrückführ-Ventil einer Brennkraftmaschine handelt es sich bei dem kalten Fluidstrom um die Ansaugluft der Brennkraftmaschine, so daß dieser kalte Fluidstrom Temperaturen von beispielsweise -20°C bis + 140°C annehmen kann. Diesem kalten Fluidstrom soll im insbesondere beabsichtigten Anwendungsfall ein mehr oder minder großer Abgasstrom der Brennkraftmaschine zugemischt werden, der bei üblichen Brennkraftmaschinen in diesem Bereich Temperaturen von bis zu 500° C besitzen kann.

Beispielsweise zur Gewichtsreduzierung oder Kostenreduzierung ist es erwünscht, ein Zumischventil bzw. Abgasrückführ-Ventil zumindest teilweise in Kunststoff auszubilden, wie dies beispielsweise für die Mündung einer Abgasrückführ-Leitung in eine Kunststoff-Sauganlage einer Brennkraftmaschine bereits bekannt ist (vgl. Motortechnische Zeitschrift 54 (1993) 3, Seite 150 bis 153). Bei einem Zumischventil bzw. Abgasrückführ-Ventil bietet sich für die Ausführung in Kunststoff insbesondere der Kanal bzw. das Gehäuse zur Führung des kalten Fluidstromes an, da der Kunststoff durch diesen kalten Fluidstrom nicht in unzulässiger Weise thermisch belastet wird. So ist aus der EP-A-0 486 338 eine Einlaßsammelleitung einer Brennkraftmaschine bekannt, die in Kunststoff ausgebildet ist und in die über ein bereichsweise von der Kunststoffwand beabstandetes Zuführrohr ein Abgasstrom der Brennkraftmaschine eingeführt wird. Bei dieser bekannten Einlaßsammelleitung hanelt es sich jedoch nicht um ein Abgasrückführventil, nachdem dort kein Ventilschließglied vorhanden ist. Mit Vorsehen eines derartigen Ventilschließgliedes könnte jedoch das Kunststoff-Gehäuse unzulässig hoch thermisch belastet werden.

Maßnahmen aufzuzeigen, mit Hilfe derer die durch einen heißen Fluidstrom hervorgerufene thermische Belastung eines in Kunststoff ausgeführten Gehäuses eines Abgasrückführ-Ventiles gering gehalten wird, ist Aufgabe der vorliegenden Erfindung.

Zur Lösung dieser Aufgabe ist vorgesehen, daß das in Kunststoff ausgebildete Gehäuse eine Leitrippe aufweist, die einen Teil des kalten Fluidstromes über zumindest einen vom Kunststoffgehäuse beabstandeten Abschnitt des Ventilschließgliedesführt. Vorteilhafte Aus- und Weiterbildungen sind Inhalt der Unteransprüche, so ist insbesondere der unter Einwirkung der Leitrippe vom kalten Fluidstrom beaufschlagte Ventilschließglied-Abschnitt ein Wandabschnitt des Rohres.

Erfindungsgemäß wird das im Zumischventil vorgesehene und den heißen Fluidstrom führende und steuernde und somit auch von diesem beaufschlagte Ventilschließglied durch den kalten Fluidstrom intensivst gekühlt, indem auch dieser das Ventilschließglied beaufschlagt. Eine Leitrippe bildet dabei für den kalten Fluidstrom einen relativ geringen Strömungswiderstand und lenkt diesen teilweise zum Ventilschließglied hin. Das Ventilschließglied, das in seiner Gesamtheit betrachtet das Kunststoffgehäuse durchdringt, um den heißen Fluidstrom dem kalten Fluidstrom beimengen zu können, gibt somit einen Großteil der über den heißen Fluidstrom zugeführten Wärmemenge in einem Bereich bzw. Abschnitt, der vom Kunststoffgehäuse beabstandet ist, direkt an den kalten Fluidstrom ab, ohne dabei das Kunststoffgehäuse in unzulässiger Weise zu erwärmen. Dabei soll ausdrücklich darauf hingewiesen werden, daß ein Abgasrückführ-Ventil einer Brennkraftmaschine lediglich einen bevorzugten Anwendungsfall für die vorliegende Erfindung darstellt; daneben ist dieser Gedanke jedoch auch an anderen Zumischventilen, in denen ein heißer Fluidstrom einem kalten Fluidstrom beigemengt werden kann, anwendbar.

Bei dem Ventilschließglied kann es sich um einen einfachen Ventilteller handeln, besonders wirkungsvoll ist der Schutz des den kalten Fluidstrom führenden Kunststoffgehäuses bzw. Kunststoffkanales jedoch dann, wenn dieses Ventilschließglied auch den heißen Fluidstrom führt, da dann die vom heißen Fluidstrom antransportierte Wärmemenge optimal über eine relativ große Fläche an den kalten Fluidstrom weitergegeben werden kann. Hierzu kann somit das Ventilschließglied ein den heißen Fluidstrom führendes Rohr sein, auf dessen Ende ein abhebbarer Ventilteller aufsitzt. Insbesondere wird vom kalten Fluidstrom unter Wirkung der Leitrippe ein freiliegender Wand-Abschnitt dieses Rohres umströmt, wozu dieser umströmte Wand-Abschnitt in einem sog. Abzweigflansch des Kunststoffgehäuses verläuft. Dieser Abzweigflansch geht vom im wesentlichen rohrförmigen Kunststoffgehäuse in einer Ausrichtung im wesentlichen quer zur Strömungsrichtung des kalten Fluidstromes ab und kann mit seiner außenliegenden Schulter über einen Tragflansch das den heißen Fluidstrom führende Rohr tragen. Bevorzugt ragt dieses Rohr mit seinem freien, durch den Ventilteller verschließbaren Ende in den Strömungsquerschnitt des Fluidstromes hinein, da dann lediglich eine geringfügige Umlenkung dieses kühlenden Fluidstromes erforderlich wird. Die Leitrippe liegt dann bevorzugt im Endbereich des den heißen Fluidstrom führenden Rohres und kann zur Ausübung ihrer Umlenkfunktion L-förmig gestaltet sein. Um dabei tatsächlich eine optimale Umströmung des heißen Rohres zu erzielen, sollte die Leitrippe möglichst nahe am Rohrende anliegen. Hierzu wird vorgeschlagen, in der Leitrippe, die im übrigen im Sinne eines einfachen Fertigungsprozesses an die Innenwand des Kunststoffgehäuses angeformt sein kann, eine Aussparung vorzusehen, in die das Rohr bzw. allgemein das Ventilschließglied eindringt.

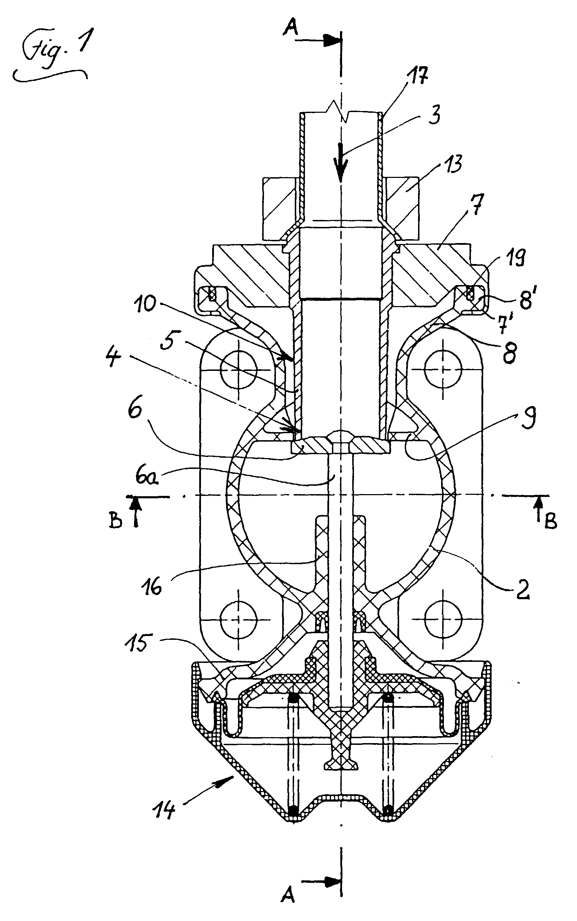

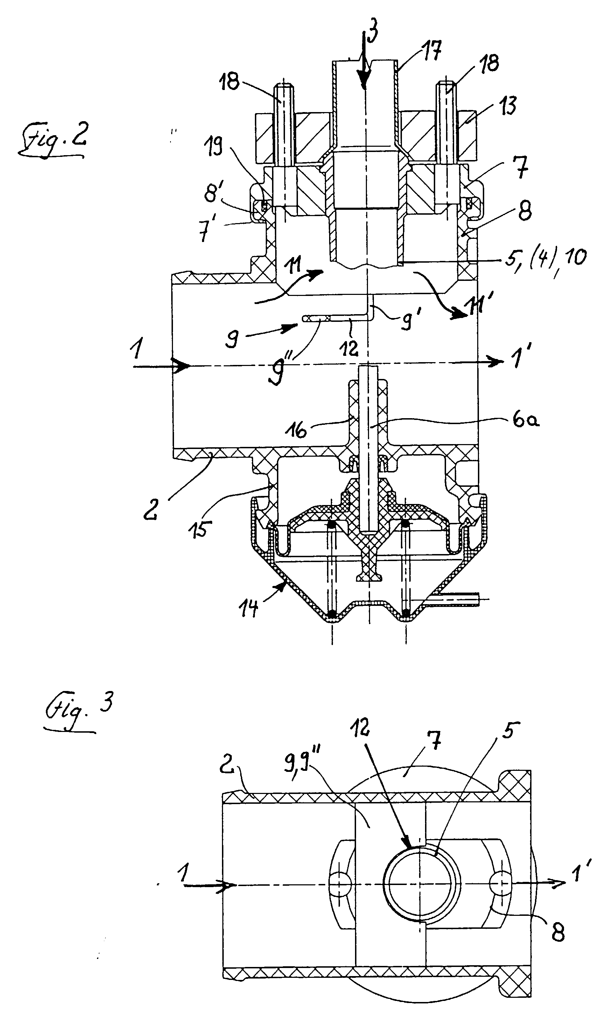

Im Sinne einer optimierten Bauraumaufteilung kann ein den Ventilteller tragender Ventilschaft inklusive einer Betätigungsvorrichtung für den Ventilschaft bzw. für das Ventil gegenüberliegend dem Abzweigflansch auf der Außenseite des Kunststoffgehäuses angeordnet sein, wobei dieses Kunststoffgehäuse zugleich mit einer Aufnahme für die Betätigungsvorrichtung versehen sein kann. Dabei kann sowohl die Betätigungsvorrichtung als auch der Tragflansch des heißen Rohres, der im übrigen auch eine Halteeinrichtung für eine sich an dieses Rohr anschließende Fluidleitung aufweisen kann, über eine Bördel- oder Clipsverbindung am Kunststoffgehäuse befestigt sein. Mit dieser Maßnahme ist ein erfindungsgemäßes Zumischventil in optimaler Weise recyclingfähig. Durch einfaches Abreißen bzw. Aufbrechen der Bördel- oder Clipsverbindung können Kunststoff-Bestandteile sowie Nichtkunststoff-Bestandteile schnell und einfach voneinander getrennt werden. Dies sowie weitere Vorteile werden auch aus der folgenden Beschreibung eines bevorzugten Ausführungsbeispieles der Erfindung ersichtlich. Dabei zeigt Fig. 1 eine geschnittene Aufsicht, Fig. 2 den Schnitt A-A aus Fig. 1, sowie Fig. 3 den Schnitt B-B aus Fig. 1.

Bei dem gezeigten Zumischventil handelt es sich um Abgasrückführ-Ventil einer Brennkraftmaschine. Ein kalter Fluidstrom wird gemäß Pfeilrichtung 1 als Ansaugluftstrom durch ein kanalförmiges Kunststoffgehäuse 2 einer nicht gezeigten Brennkraftmaschine zugeführt. Diesem kalten Fluidstrom 1 soll in dem gezeigten, im wesentlichen aus dem Kunststoffgehäuse 2 bestehenden Zumischventil ein heißer Fluidstrom gemäß Pfeilrichtung 3 in Form eines rückgeführten Abgasstromes dosiert beigemengt werden. Die Dosierung des heißen Fluidstromes 3 erfolgt dabei über ein in seiner Gesamtheit mit 4 bezeichnetes Ventilschließglied.

Im einzelnen besteht dieses Ventilschließglied 4 aus einem den heißen Fluidstrom 3 führenden Rohr 5, sowie einem das offene Ende dieses Rohres 5 abschließenden Ventilteller 6. Wie ersichtlich durchdringt das Rohr 5 das Kunststoffgehäuse 2 und ist dabei über einen Tragflansch 7 am Kunststoffgehäuse 2 gelagert. Dabei berüht das aufgrund des heißen Abgas- bzw. Fluidstromes 3 ebenfalls heiße Rohr 5 an keiner Stelle direkt das Kunststoffgehäuse 2, da dieses nämlich durch eine derartige direkte Berührung und Wärmeleitung vom heißen Rohr 5 in das Kunststoffgehäuse 2 in unzulässiger Weise erwärmt werden würde. Wie ersichtlich ist das Rohr 5 rundum vom Kunststoffgehäuse 2 beabstandet, da das Kunststoffgehäuse 2 im Bereich dieses Rohres 5 einen Abzweigflansch 8 aufweist, der - wie insbesondere die Fig. 2 und 3 zeigen - eine deutlich größere Querschnittsfläche besitzt als das Rohr 5. Dabei ist der Abzweigflansch 8 im wesentlichen quer zur Strömungsrichtung 1 des kalten Fluidstromes ausgerichtet.

Jedoch könnte auch über Wärmestrahlung das Kunststoffgehäuse 2 im Bereich des Rohres 5 Schaden nehmen, so daß eine weitere Maßnahme zur Abfuhr der über den heißen Fluidstrom 3 bzw. das Rohr 5 herangebrachten Wärmemenge vorgesehen ist. Diese weitere Maßnahme besteht in einer Leitrippe 9, die einen Teil des kalten Fluidstromes 1 über den vom Kunststoffgehäuse 2 beabstandeten Wand-Abschnitt 10 des Rohres 5 führt. Ein Teil des kalten Fluidstromes gelangt somit unter Ablenkung durch die Leitrippe 9 gemäß Pfeilrichtung 11 (Fig. 2) in den Innenraum des Abzweigflansches 8 und umstreicht dabei das Rohr 5, wodurch dieses intensivst gekühlt wird. Nach Umstreichen des Rohres 5 wird dieser Teil-Fluidstrom selbstverständlich wieder gemäß Pfeilrichtung 11' dem das Kunststoffgehäuse 2 gemäß Pfeilrichtung 1' verlassenden Fluidstrom beigemengt.

Die Leitrippe 9 ist L-förmig ausgebildet und - wie insbesondere die Fig. 1, 3 zeigen - an die Innenwand des Kunststoffgehäuses 2 angeformt. Dabei weist die Leitrippe 9 eine Aussparung 12 auf, in die das Rohr 5 mit seinem Endabschnitt hineinragt. In der Darstellung gemäß Fig. 2 ist dieser Endabschnitt des Rohres 5 abgebrochen sowie der Ventilteller 6 entfernt, um die Form der Leitrippe 9 zeigen zu können. Mit dieser Formgebung sowie der gegenseitigen Zuordnung der Leitrippe 9 sowie des Rohres 5 wird eine optimale Kühlung durch den kalten Fluidstrom 1 erzielt. In diesem Zusammenhang ist anzumerken, daß das Rohr 5 mit seinem mit dem Ventilteller 6 zusammenwirkenden Endabschnitt in den Strömungsquerschnitt des kalten Fluidstromes 1 hineinragt und daß der quer zur Strömungsrichtung 1 liegende Schenkel 9' der Leitrippe 9 über einer gewissen Länge des Rohres 5 auch noch seitlich desselben verläuft, um den vom anderen Schenkel 9'' abgetrennten Teil-Fluidstrom möglichst umfassend gemäß Pfeilrichtung 11 in den Innenraum des Abzweigflansches 8 zu leiten.

Vervollständigt wird das Ventilschließglied durch den bereits besagten Ventilteller 6, der auf dem offenen Ende des Rohres 5 aufliegen kann und somit eine Beimengung des heißen Fluidstromes 3 verhindert bzw. vom offenen Ende abheben kann und somit eine mehr oder minder starke Beimengung des heißen Fluidstromes 3 zum kalten Fluidstrom 1 ermöglicht. Betätigt wird der Ventilteller 6 durch einen Ventilschaft 6a, an dem seinerseits eine in ihrer Gesamtheit mit 14 bezeichnete und beispielsweise durch Unterdruck bewegte Betätigungsvorrichtung angreift. Diese Betätigungsvorrichtung 14 ist - wie ersichtlich - auf der dem Abzweigflansch 8 gegenüberliegenden Außenseite des Kunststoffgehäuses 2 befestigt, wozu an das Kunststoffgehäuse 2 eine entsprechende Aufnahme 15 angeformt ist. Ebenso angeformt ist eine Führung 16 für den Ventilschaft 6a.

Wie bereits erläutert, ist das Rohr 5 mit einem Tragflansch 7 versehen. An diesem Tragflansch 7 kann ein Gegenflansch 13 einer den Abgasstrom bzw. den heißen Fluidstrom 3 zum gezeigten Zumischventil führenden Fluidleitung 17 angeschraubt werden. Hierzu ist der Tragflansch 7 mit einer entsprechenden Halteeinrichtung 18 in Form zweier eingefügter Stehbolzen versehen. Der Tragflansch 7 ist - ebenfalls zur Gewichtsersparnis - aus Leichtmetall gefertigt und weist einen derartig dünn ausgebildeten Rand 7' auf, daß dieser Rand um die Schulter 8' des Abzweigflansches 8 umgebördelt werden kann. Dabei wird vor dem Aufsetzen des Tragflansches 7 auf die Schulter 8' in eine darin vorgesehene Nut eine Ringdichtung 19 eingelegt. Aufgrund dieser Bördelverbindung sowie aufgrund der einfachen Schnapp- bzw. Clipsverbindung zwischen der Betätigungsvorrichtung 14 sowie der Aufnahme 15 des Kunststoffgehäuses 2 kann das gezeigte Zumischventil zu Recyclingzwecken auf einfache Weise auseinandergebaut werden. Hierzu muß lediglich der Tragflansch 7 sowie die Betätigungsvorrichtung 14 vom Kunststoffgehäuse 2 abgerissen werden, wobei sich auf einfache Weise ebenfalls der Ventilteller 6 vom Ventilschaft 6a löst. Während - wie bereits erwähnt - der Tragflansch 7 aus Leichtmetall gefertigt ist, kommt für das Rohr 5 bevorzugt Edelstahl zum Einsatz. Ein bevorzugter Kunststoff zur Fertigung des Kunststoffgehäuses 2 ist PPS (Polyphenylensulfid). Dies sowie weitere konstruktive Details können jedoch durchaus abweichend vom gezeigten Ausführungsbeispiel gestaltet sein, ohne den Inhalt der Patentansprüche zu verlassen. Mit einem erfindungsgemäßen Zumischventil wurden dabei mit einem heißen Fluidstrom von ca. 350°C an der heißesten Stelle des Kunststoffgehäuses - diese liegt im Übergangsbereich von der Leitrippe 9 zum Abzweigflansch 8 - Temperaturen von kleiner 170°C gemessen, die für das oben genannte Kunststoffmaterial völlig unkritisch sind.

## Patentansprüche

1. Zumischventil zur Beimengung eines heißen Fluidstromes zu einem kalten Fluidstrom, insbesondere Abgasrückführventil einer Brennkraftmaschine, mit einem Gehäuse (2) zur Führung des kalten Fluidstromes (1) und einem den heißen Fluidstrom (3) zuführenden und steuernden Ventilschließglied (4), das aus einem den heißen Fluidstrom (3) führenden Rohr (5), das das Gehäuse (2) durchdringt und am Gehäuse (2) gelagert ist, sowie aus einem auf das Rohrende aufsetzbaren Ventilteller (6) besteht,
dadurch gekennzeichnet, daß das in Kunststoff ausgebildete Gehäuse (2) eine Leitrippe (9) aufweist, die einen Teil des kalten Fluidstromes (1) über zumindest einen vom Kunststoffgehäuse (2) beabstandeten Abschnitt des Ventilschließgliedes (4) führt.

2. Zumischventil nach Anspruch 1,
dadurch gekennzeichnet, daß der unter Einwirkung der Leitrippe (9) vom kalten Fluidstrom (1) beaufschlagte Ventilschließglied-Abschnitt ein Wand-Abschnitt (10) des Rohres (5) ist.

3. Zumischventil nach Anspruch 1 oder 2,
dadurch gekennzeichnet, daß das rohrförmige Kunststoffgehäuse (2) einen im wesentlichen quer zur Strömungsrichtung des kalten Fluidstromes (1) ausgerichteten Abzweigflansch (8) aufweist, in dem das den heißen Fluidstrom (3) führende Rohr (5) längs eines Wand-Abschnittes (10) vom Kunststoffgehäuse (2) beabstandet verläuft.

4. Zumischventil nach einem der Ansprüche 1 bis 3,
dadurch gekennzeichnet, daß das Ventilschließglied (4), insbesondere das Rohr (5) in den Strömungsquerschnitt des kalten Fluidstromes (1) hineinragt und dabei die im wesentlichen L-förmige, an die Innenwand des Kunststoffgehäuses (2) angeformte Leitrippe (9) in einer Aussparung (12) durchdringt.

5. Zumischventil nach einem der Ansprüche 3 bis 4,
dadurch gekennzeichnet, daß das den heißen Fluidstrom (3) führende Rohr (5) mit seinem außerhalb des Kunststoffgehäuses (2) liegenden Endabschnitt über einen Tragflansch (7) an einer Schulter (8') des Abzweigflansches (8) befestigt ist.

6. Zumischventil nach einem der Ansprüche 3 bis 5,
dadurch gekennzeichnet, daß ein den Ventilteller (6) tragender Ventilschaft (6a) die dem Abzweigflansch (8) gegenüberliegende Seite des Kunststoffgehäuses (2) durchdringt, das auf seiner Außenseite eine Betätigungsvorrichtung (14) für den Ventilschaft (6a) trägt.

7. Zumischventil nach einem der Ansprüche 5 oder 6,
dadurch gekennzeichnet, daß die Betätigungsvorrichtung (14) und/oder der Tragflansch (7) über eine Bördel- oder Clipsverbindung am Kunststoffgehäuse (2) befestigt ist.

8. Zumischventil nach einem der Ansprüche 5 bis 7, dadurch gekennzeichnet, daß der in Leichtmetall ausgeführte Tragflansch (7) eine Halteeinrichtung (18) für eine sich an das den heißen Fluidstrom (3) führende Rohr (5) anschließende Fluidleitung (17) aufweist.

## Claims

1. A mixing valve for adding a hot fluid stream to a cold fluid stream, especially an exhaust-gas circulating valve in an internal combustion engine, comprising a casing (2) for conveying the cold fluid stream (1) and a valve closure member (4) supplying and guiding the hot fluid stream (3), which comprises a pipe (5) conveying the hot fluid stream (3) and extending through the casing (2), which is mounted in the casing (2), and a valve disc (6) for mounting on the end of the pipe,
characterised in that the casing (2), which is made of plastics material, has a guide rib (9) which conveys a part of the cold fluid stream (1) over at least one portion of the valve closure member (4) remote from the plastics material casing (2).

2. A mixing valve according to claim 1,
characterised in that the valve closure member portion acted upon by the cold fluid stream (1) via the guide rib (9) is a wall portion (10) of the pipe (5).

3. A mixing valve according to claim 1 or claim 2,
characterised in that the tubular plastics material casing (2) has a branch flange (8) extending substantially at right angles to the direction of flow of the cold fluid stream (1) and in which the pipe (5) conveying the hot fluid stream (3) extends along a wall portion (10) at a distance from the plastics material casing (2).

4. A mixing valve according to any of claims 1 to 3,
characterised in that the valve closure member (4), especially the pipe (5), projects into the flow cross-section of the cold fluid stream (1) and extends in a recess (12) through the guide rib (9), which is substantially L-shaped and integrally moulded on the inner wall of the plastics material casing (2).

5. A mixing valve according to claim 3 or claim 4,
characterised in that the end portion, outside the plastics material casing (2), of the pipe (5) conveying the hot fluid stream (3) is secured via a bearing flange (7) to a shoulder (8') on the branch flange (8).

6. A mixing valve according to any of claims 3 to 5,
characterised in that a valve stem (6a) bearing the valve disc (6) extends through the side of the plastics material casing opposite to the branch flange (8), and a device (14) for actuating the valve stem (6a) is mounted on the outside of the plastics material casing.

7. A mixing valve according to claim 5 or claim 6,
characterised in that the actuating device (14) and/or the bearing flange (7) is secured to the plastics material casing (2) by a jointed-flange or clip connection.

8. A mixing valve according to any of claims 5 to 7,
characterised in that the bearing flange (7), which is made of light metal, has a holder (18) for a fluid line (17) connected to the pipe (5) conveying the hot fluid stream (3).

## Revendications

1. Soupape de mélange pour mélanger un écoulement de fluide brûlant avec un écoulement de fluide froid, en particulier soupape de recyclage des gaz d'échappement d'un moteur à combustion interne, avec un carter (2) guidant l'écoulement de fluide froid (1) et un organe de fermeture de soupape (4) guidant et commandant l'écoulement de fluide brûlant (3), organe qui consiste en un tuyau (5) guidant l'écoulement de fluide brûlant (3)qui passe à travers le carter (2) et est monté sur ce carter (2) ainsi qu'en une tête de soupape (6) que l'on peut appliquer sur l'extrémité du tuyau,
caractérisée en ce que
le carter (2), constitué en matière plastique, présente une nervure de guidage (9) qui amène une partie de l'écoulement de fluide froid (1) par au moins une section de l'organe de fermeture de soupape (4) qui est à une certaine distance du carter en matière plastique (2).

2. Soupape de mélange selon la revendication 1,
caractérisée en ce que,
la section de l'organe de fermeture de soupape qui est sollicitée par l'écoulement de fluide froid (1) sous l'action de la nervure de guidage (9), est une section de paroi (10) du tuyau (5).

3. Soupape de mélange selon la revendication 1 ou 2,
caractérisée en ce que,
le carter en matière plastique (2), en forme de tuyau, présente une bride de dérivation (8) orientée de façon sensiblement perpendiculaire à la direction de l'écoulement de fluide froid (1), bride dans laquelle s'étend le tuyau (5) qui amène l'écoulement de fluide brûlant (3), le long d'une section de paroi (10), à une certaine distance du carter en matière plastique (2).

4. Soupape de mélange selon l'une des revendications 1 à 3,
caractérisée en ce que,
l'organe de fermeture de soupape (4), en particulier le tuyau (5), pénètre dans la section transversale de l'écoulement de fluide froid (1) et, ce faisant, passe à travers la nervure de guidage en forme de L(9) dans un évidement (12), nervure de guidage qui est formée sur la paroi intérieure du carter en matière plastique (2).

5. Soupape de mélange selon l'une des revendications 3 à 4,
caractérisée en ce que,
le tuyau (5) qui amène l'écoulement de fluide brûlant (3) est fixé par sa section terminale qui se trouve en-dehors du carter en matière plastique (2), par l'intermédiaire d'une bride de support (7), sur un épaulement (8') de la bride de dérivation (8).

6. Soupape de mélange selon l'une des revendications 3 à 5,
caractérisée en ce que,
une tige de soupape (6a) qui porte la tête de soupape (6) passe à travers le côté du carter en matière plastique (2) qui est opposé à la bride de dérivation (8), carter qui porte sur son côté extérieur un dispositif d'actionnement (14) pour la tige de soupape (6a).

7. Soupape de mélange selon l'une des revendications 5 ou 6,
caractérisée en ce que,
le dispositif d'actionnement (14) et/ou la bride de support (7) est fixé, au moyen d'une liaison par sertissage ou par enclipsage, sur le carter en matière plastique (2).

8. Soupape de mélange selon l'une des revendications 5 à 7,
caractérisée en ce que,
la bride de support (7) qui est réalisée en un métal léger, présente un dispositif de maintien (18) pour une conduite de fluide (17) qui se raccorde au tuyau (5) amenant l'écoulement de fluide brûlant (3).
